# EUROPÄISCHE PATENTSCHRIFT

(11) **EP 2 023 464 B1**
(45) Veröffentlichungstag und Bekanntmachung des Hinweises auf die Patenterteilung: **12.02.2014**
(21) Anmeldenummer: 08013090.9
(22) Anmeldetag: 21.07.2008
(51) Int. Cl.: G06K 19/077, G06K 19/07

(54) **Energieaufnahme kontaktloser Datenträger**
Energy consumption of contactless data carriers
Réception d'énergie de supports de données sans contact

(30) Priorität: 23.07.2007 DE 102007034173
(43) Veröffentlichungstag der Anmeldung: 11.02.2009
(73) Patentinhaber: Giesecke & Devrient GmbH, 81677 München (DE)
(72) Erfinder: Baldischweiler, Michael, 81825 München (DE)

(56) Entgegenhaltungen:
- EP-A- 1 770 605
- WO-A-01/54048
- WO-A-03/065302
- US-A1- 2002 096 568

## Beschreibung

Die Erfindung betrifft ein Verfahren zum Steuern der kontaktlosen Energieaufnahme eines portablen Datenträgers und einen entsprechend eingerichteten Datenträger, insbesondere die Energieaufnahme aus einem elektromagnetischen Feld über eine Spule des Datenträgers mittels induktiver Kopplung.

Verschiedene portable Datenträger sind bekannt, die selbst über keine eigene Energieversorgung, beispielsweise in Form einer Batterie, verfügen, sondern die Energie zum Betrieb aus einem elektromagnetischen Feld beziehen. Ein solches Feld wird meist von einem Lesegerät erzeugt, welches mit dem entsprechenden Datenträger kommuniziert, und dient zusätzlich der Datenübertragung zwischen dem Lesegerät und dem jeweiligen Datenträger. Solche Datenträger sind z.B. einfache Transponder, wie sie zur Warensicherung verwendet werden, aber auch komplexere Datenträger, die über einen integrierten Schaltkreis zum Speichern und/oder Verarbeiten von Daten verfügen, beispielsweise kontaktlose Chipkarten nach ISO/IEC 14443.

Die Energieaufnahme eines solchen Datenträgers aus einem elektromagnetischen Feld hängt von verschiedenen Parametern ab. Dazu gehören bei konstantem elektromagnetischen Feld insbesondere die Position des Datenträgers im Feld und die geometrische Ausgestaltung der Antenne, beispielsweise einer Spule, des Datenträgers.

Es ist bekannt, Transponder zur Warensicherung zu deaktivieren, indem diese kurzzeitig einem starken elektromagnetischen Feld ausgesetzt werden, welches zu einer hohen Energieaufnahme des Transponders führt, die diesen zerstört. Bei der Herstellung dieser Transponder werden dazu einzelne Bauteile, z.B. Leitungsdrähte oder Kondensatoren, derart ausgebildet, dass sie bei einer beschriebenen erhöhten Energieaufnahme zerstört werden. Die spezielle Herstellung dieser Bauteile ist aufwendig und kostenintensiv.

US 2002/0096568 A1 offenbart ein kartenförmiges Speichermedium mit einer Antenne, wobei eine elektronische Schaltung mit der Antenne verbunden ist. Die Antenne empfängt die elektrische Energie, mit der sie die Schaltung versorgt. Das Speichermedium umfasst eine Einrichtung zur Lastwiderstandsanpassung, um den Lastwiderstand der Schaltung aus Sicht der Antenne in einen vorbestimmten Widerstand zu übertragen, um die Schaltung mit der maximal möglichen elektrischen Energie zu versorgen. Zur Anpassung des Widerstands wird ein Verhältnis aus zwei Spulenwindungszahlen bestimmt, wobei die eine Windungszahl der Windungszahl der Antennenspule entspricht und die andere Windungszahl so bestimmt wird, dass sie dem gewünschten Widerstandsverhältnis entspricht. Die Spannung für die Schaltung wird dann an der Stelle der Antennenspule abgegriffen, welche der anderen, bestimmten Windungszahl entspricht und dort einen Maximalwert hat.

EP 0 754 334 B1 offenbart einen Transponder, der mehrere Kondensatoren und parallele Spulen zur Bildung eines elektrischen Schwingkreises umfasst. Dabei laufen verschiedene Leitungszweige entsprechender Enden verschiedener Spulen an einem Punkt zusammen und bilden einen gemeinsamen Leitungsabschnitt. Dadurch fließt durch diesen gemeinsamen Leitungsabschnitt ein sehr hoher Strom, wenn der Transponder einem starken elektromagnetischen Feld ausgesetzt ist, und der Leitungsabschnitt kann somit einfach zur Deaktivierung des Transponders zerstört werden, ohne dass der Leitungsabschnitt dazu beispielsweise außergewöhnlich dünn ausgebildet sein muss. Es besteht jedoch die Gefahr der irrtümlichen Deaktivierung bei nur leicht erhöhter Energieaufnahme.

JP 2000339428 A beschreibt ein Verfahren zum Herstellen einer dünnen Spulenantenne. Dazu wird ein flächiges Substrat zu beiden Seiten einer Faltkante mit symmetrisch angeordneten Spulen versehen, die durch Zusammenklappen des Substrats entlang der Faltkante aufeinander zu liegen kommen und mittels eines Klebers zu einer gemeinsamen Spule verbunden werden.

US 4,583,009 und US 5,574,470 beschreiben jeweils flächige Datenträger, bei denen auf beiden Seiten einer nicht leitenden Schicht des jeweiligen Datenträgers Spulen aufgebracht sind. Die Spulen sind dabei symmetrisch zueinander angeordnet, sodass sie sich teilweise überlappen und dadurch gleichzeitig als Kapazität des Datenträgers verwendet werden können.

Bei komplexeren Datenträgern mit integriertem Schaltkreis ist darauf zu achten, dass bei erhöhter Energieaufnahme des Datenträgers, beispielsweise aufgrund hoher induzierter Spannung in einer Spule des Datenträgers, der integrierte Schaltkreis des Datenträgers nicht zerstört wird. Dieser benötigt für seinen Betrieb meist nur eine recht geringe, weitestgehend konstante Betriebsspannung. Deshalb umfasst ein solcher Datenträger in der Regel einen so genannten Shunt- oder Parallelregler, um eine in dem Datenträger anliegende, von der in der Spule des Datenträgers induzierten Spannung abhängige Spannung zu regeln. Auf diese Weise wird eine weitestgehend konstante Versorgungsspannung für den integrierten Schaltkreis des Datenträgers bereitgestellt, die im Wesentlichen der Betriebsspannung entspricht (siehe Klaus Finkenzeller, RFID-Handbuch, 3. Auflage, Carl Hanser Verlag, München, 2002).

Überschüssig von dem Datenträger aufgenommene Energie wird in dem Parallelregler im Wesentlichen in Wärme umgesetzt. Dies hat zur Folge, dass der Datenträger dadurch auf die Dauer Schaden nehmen kann, beispielsweise indem sich Kartenmaterial, insbesondere Kunststoff, durch die Hitzeeinwirkung des Parallelreglers verfärbt. Es ist auch möglich, insbesondere bei Datenträgern, die dauerhaft einem elektromagnetischen Feld ausgesetzt sind, dass der integrierte Schaltkreis des Datenträgers durch die dauerhafte Wärmeeinwirkung gestört oder gar zerstört wird.

Es ist demnach die Aufgabe der vorliegenden Erfindung, ein Verfahren zur kontaktlosen Energieaufnahme eines portablen Datenträgers und einen entsprechend eingerichteten Datenträger bereitzustellen, welches die Aufnahme überschüssiger Energie weitestgehend vermeidet.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Die vorliegende Erfindung basiert auf dem Grundgedanken, den Datenträger mit einer Spule mit separat zur Energieaufnahme aktivierbaren Spulenwindungen zu versehen.

Das erfindungsgemäße Verfahren steuert die Energieaufnahme eines portablen Datenträgers aus einem elektromagnetischen Feld, in dem sich der Datenträger befindet. Dies geschieht mittels einer eine Vielzahl von separat aktivierbaren Spulenwindungen umfassenden Spule des Datenträgers. Dabei wird in einem ersten Schritt zumindest ein die Energieaufnahme des Datenträgers betreffender Wert ermittelt. In Abhängigkeit von dem zumindest einen Wert wird eine geeignete Spulenwindungsanzahl bestimmt. Schließlich wird eine Anzahl der Spulenwindungen zur Energieaufnahme aus dem elektromagnetischen Feld aktiviert, wobei diese Anzahl der zuvor bestimmten geeigneten Spulenwindungsanzahl entspricht.

Mit dem erfindungsgemäßen Verfahren ist es möglich, die Anzahl der Spulenwindungen der Spule, die zur Energieversorgung aus dem elektromagnetischen Feld aktiviert sind, zu verändern. Auf diese Weise kann die Energieaufnahme des Datenträgers an äußere Bedingungen und Datenträgereigenschaften angepasst werden. Befindet sich der Datenträger beispielsweise in optimaler Lage in einem von einer Lesegerätspule erzeugten Feld, so genügen eventuell bereits wenige aktivierte Spulenwindungen der Spule, damit in der durch diese aktivierten Spulenwindungen definierten aktivierten Teilspule durch das Feld eine Spannung induziert wird, die ausreicht, um den Datenträger mit Energie zu versorgen. Hierbei wird keine bzw. lediglich wenig überschüssige Energie durch den Datenträger aufgenommen. Auf eine Spannungsregelung aufgrund überschüssig aufgenommener Energie kann also weitestgehend verzichtet werden. Somit fällt keine damit ansonsten einhergehende starke Wärmeentwicklung in dem Datenträger an und die mit dieser Wärmeentwicklung verbundenen Nachteile für den Datenträger treten nicht auf.

Befindet sich der Datenträger hingegen in einer nicht optimalen Position in dem Feld, beispielsweise relativ weit vom Zentrum der Lesegerätspule entfernt, so kann durch das Aktivieren einer größeren Anzahl von Spulenwindungen erneut eine hinreichende Energieversorgung des Datenträgers sichergestellt werden, da dadurch die induktive Kopplung zwischen der Lesegerätspule und der aktivierten Teilspule des Datenträgers erhöht wird. Eine Aufnahme überschüssiger Energie tritt in diesem Fall wegen der Lage des Datenträgers nicht auf.

Das erfindungsgemäße Verfahren eignet sich demnach zum bedarfsgerechten Steuern der Energieaufnahme des Datenträgers aus einem elektromagnetischen Feld, da eine überschüssige Energieaufnahme verhindert wird und die damit einhergehenden, vorstehend beschriebenen Nachteile vermieden werden. Andererseits kann durch das Aktivieren einer solchen Anzahl von Spulenwindungen, die den Parametern angepasst ist, die die Energieaufnahme betreffen, stets eine ausreichende Energieversorgung des Datenträgers in dem elektromagnetischen Feld sichergestellt werden.

Unter dem Aktivieren von Spulenwindungen bzw. einer Teilspule der Spule ist ein Bereitstellen der Spulenwindungen für die Funktion der Energieaufnahme bzw. des Beitragens zum Ausbilden einer Induktionsspannung zu verstehen. Eine aktivierte Spulenwindung ist also im Kontext der vorliegenden Erfindung so eingerichtet, dass sie in der Spule wirksam werden kann, sobald ein entsprechendes elektromagnetisches Feld die Spule durchsetzt. Nicht aktivierte Spulenwindungen oder eine nicht aktivierte Teilspule sind dementsprechend unwirksam, da sie keinen Beitrag zum Ausbilden einer Induktionsspannung leisten.

Der entsprechende erfindungsgemäße Datenträger umfasst einen integrierten Schaltkreis, eine eine Vielzahl von Spulenwindungen umfassende Spule, die zur Energieaufnahme aus einem elektromagnetischen Feld eingerichtet ist, in dem sich der Datenträger befindet. Weiterhin umfasst der Datenträger eine Aktivierungseinrichtung zum Aktivieren von Spulenwindungen der Spule zur Energieaufnahme aus dem elektromagnetischen Feld sowie eine Steuereinrichtung. Diese ist eingerichtet, den zumindest einen die Energieaufnahme des Datenträgers betreffenden Wert mittels eines geeigneten Sensors zu ermitteln und eine geeignete Spulenwindungsanzahl in Abhängigkeit von dem zumindest einen Wert zu bestimmen. Die Steuereinrichtung ist ferner eingerichtet, die Aktivierungseinrichtung zu veranlassen, diejenige Anzahl von Spulenwindungen der Spule zu aktivieren, die der geeigneten Spulenwindungsanzahl entspricht.

Die geeignete Spulenwindungsanzahl wird vorzugsweise zusätzlich in Abhängigkeit von einer Betriebsspannung des Datenträgers derart bestimmt, dass eine durch das elektromagnetische Feld in der aktivierten Teilspule induzierte Induktionsspannung zumindest der Betriebsspannung des Datenträgers entspricht. Auf diese Weise wird also stets sichergestellt, dass der integrierte Schaltkreis des Datenträgers ausreichend mit Energie versorgt ist, solange sich der Datenträger in einer ausreichend guten Position in dem elektromagnetischen Feld befindet.

Die Spulenwindungsanzahl wird derart bestimmt, dass die induzierte Spannung im Wesentlichen der Betriebsspannung entspricht, d.h. es wird gerade genügend Energie zur Versorgung des Datenträgers aufgenommen, ohne dass überschüssig aufgenommene Energie in Wärme umgesetzt werden müsste. Die Ermittlung der geeigneten Spulenwindungsanzahl repräsentiert also eine Optimierung der aktivierten Teilspule im Hinblick auf die mindestens bereitzustellende Betriebsspannung des Datenträgers und den zu minimierenden Energieüberschuss bei zeitlich sich verändernden Regelgrößen bzw. Parametern.

In einer bevorzugten Ausführungsform des erfindungsgemäßen Verfahrens wird als der zumindest eine die Energieaufnahme betreffende Wert die magnetische Feldstärke des Feldes ermittelt. In Abhängigkeit von diesem Wert wird dann die geeignete Spulenwindungsanzahl bestimmt. Der Datenträger umfasst dazu eine Messeinrichtung zum Messen der magnetischen Feldstärke. Die Steuereinrichtung ihrerseits ist eingerichtet, eine mittels der Messeinrichtung gemessene magnetische Feldstärke als einen die Energieaufnahme betreffenden Wert bei der Ermittlung einer optimalen Spulenwindungsanzahl zu verwenden. Auf diese Weise kann die Energieaufnahme des Datenträgers insbesondere in Abhängigkeit seiner veränderlichen Position in dem elektromagnetischen Feld geregelt werden. In optimaler Lage nahe dem Zentrum des Feldes werden dabei beispielsweise weniger Spulenwindungen aktiviert als in einer Position, die vom Zentrum weiter entfernt ist und dadurch eine geringere Feldstärke aufweist.

Vorzugsweise wird eine in dem Datenträger anliegende Versorgungsspannung zusätzlich mittels eines Shunt- oder Parallelreglers geregelt. Die Versorgungsspannung hängt von einer durch das elektromagnetische Feld in der aktivierten Teilspule induzierten Spannung ab. Dadurch werden Spannungsschwankungen ausgeglichen und die Versorgungsspannung weitestgehend konstant gehalten. Aufgrund der Möglichkeit des erfindungsgemäßen Verfahrens, die in der aktivierten Teilspule induzierte Spannung durch Aktivieren einer variablen Anzahl von Spulenwindungen zu regeln, wird der Parallelregler jedoch nur zur Feinsteuerung verwendet. Der eventuell kleine Anteil an überschüssig aufgenommener Energie führt höchstens zu einer vernachlässigbaren Wärmeabstrahlung des Parallelreglers, welche keine Nachteile für den Datenträger erwarten lässt.

Der Parallelregler kann sowohl Bestandteil des integrierten Schaltkreises des Datenträgers sein, aber auch als separates Bauteil in dem Datenträger ausgebildet sein. Das gleiche gilt prinzipiell für die Steuereinrichtung und die Aktivierungseinrichtung.

Bevorzugt ist die Steuereinrichtung als eine in dem integrierten Schaltkreis des Datenträgers ausführbare Steuerapplikation implementiert. Diese steuert in der Regel das Ermitteln des zumindest einen die Energieaufnahme betreffenden Wertes und das Bestimmen der Spulenwindungsanzahl und veranlasst die Aktivierungseinrichtung, die geeignete Anzahl von Spulenwindungen zu aktivieren.

Gemäß der Erfindung entsprechen die aktivierbaren Spulenwindungen einer Vielzahl von zu Teilspulen der Spule zusammenschaltbaren, separaten Einzelspulen. Diese Einzelspulen können dabei jeweils auch mehrere Spulenwindungen umfassen, vorzugsweise aber nur wenige. Die Aktivierungseinrichtung schaltet dann zum Aktivieren einer Teilspule separate Einzelspulen zu einer dadurch aktivierten Teilspule zusammen. Die in dieser aktivierten Teilspule durch das elektromagnetische Feld induzierte Spannung liefert die Versorgungsspannung des Datenträgers.

Die Einzelspulen sind dabei vorzugsweise derart ausgebildet, dass bei nicht vorhandener Energieversorgung für den Datenträger stets eine Mindestanzahl von Einzelspulen zu der aktivierten Teilspule zusammengeschaltet sind. Diese aktivierte Teilspule definiert also eine initiale Spulenkonfiguration von aktivierten Einzelspulen, die sich immer dann automatisch einstellt, wenn keine ausreichende Energieversorgung vorliegt. Dadurch ist der Datenträger in der Lage, wenn dieser beispielsweise zur Inbetriebnahme in ein elektromagnetisches Feld eingebracht wird, eine erste Versorgungsspannung über die derartige aktivierte Teilspule aufzunehmen, bevor das erfindungsgemäße Verfahren - mit Hilfe dieser ersten Versorgungsspannung - eine für die gegebenen Umstände tatsächlich geeignete Spulenwindungsanzahl bestimmt.

Bevorzugt ist der erfindungsgemäße Datenträger als kontaktlose Chipkarte ausgebildet.

Mit Bezug auf die beiliegenden Zeichnungen wird die Erfindung im folgenden beispielhaft beschrieben. Darin zeigen:
- Fig. 1: eine schematische Darstellung einer bevorzugten Ausführungsform eines erfindungsgemäßen Datenträgers, und
- Fig. 2: die Schritte einer bevorzugten Ausführungsform des erfindungsgemäßen Verfahrens.

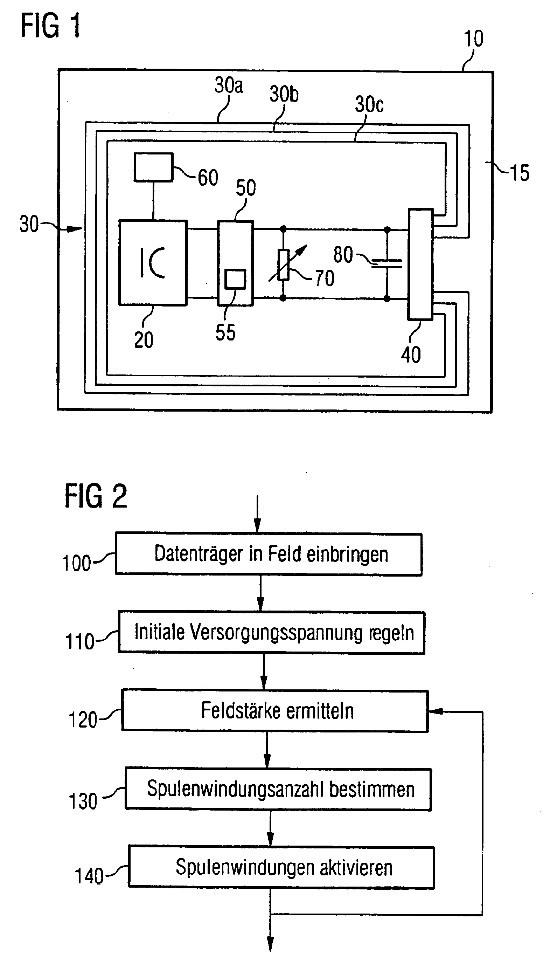

Mit Bezug auf Figur 1 umfasst ein Datenträger 10 in Form einer Chipkarte, deren Kartenkörper 15 aus Kunststoff besteht, einen integrierten Schaltkreis 20 und eine Spule 30, die aus einer Vielzahl von separaten Spulenwindungen 30a, 30b, 30c gebildet ist. Die Spulenwindungen 30a, 30b, 30c sind als separate Einzelspulen 30a, 30b, 30c ausgebildet. Die Anzahl der Einzelspulen 30a, 30b, 30c ist variabel. Es ist möglich, dass der Datenträger 10 eine andere Form annimmt, beispielsweise die eines Labels, welches zur Warensicherung verwendet wird oder dergleichen. Auch das Material des Trägersubstrats kann variieren.

Eine Aktivierungseinrichtung 40 ist eingerichtet, Einzelspulen 30a, 30b, 30c aus der Vielzahl der Einzelspulen 30a, 30b, 30c zu einer aktivierten Teilspule zusammenzuschalten. Diese aktivierte Teilspule, die aus einer Teilmenge 30a, 30b der Einzelspulen 30a, 30b, 30c bestehen kann, dient dann effektiv als die Spule, in der durch ein elektromagnetisches Feld, in dem sich die Chipkarte 10 befindet, eine Spannung induziert wird, die als Versorgungsspannung der Chipkarte 10 dient. Die nicht aktivierte Einzelspule 30c ist von der aktivierten Teilspule abgekoppelt und trägt zur Energieaufnahme der Chipkarte 10 nicht bei.

Liegt in der Chipkarte 10 keine ausreichende Versorgungsspannung an, z.B. weil sich die Chipkarte 10 in keinem ausreichend starken Feld befindet, so besteht die aktivierte Teilspule aus der gesamten Spule 30. Das heißt, die separaten Einzelspulen 30a, 30b, 30c sind so ausgebildet, dass sie immer dann automatisch zu der aktivierten Teilspule zusammengeschaltet sind, wenn in der Chipkarte 10 keine ausreichende Versorgungsspannung anliegt. Wird die Chipkarte 10 dann erneut in ein genügend starkes elektromagnetisches Feld eingebracht, so steht der Chipkarte 10 zur Energieaufnahme die gesamte Spule 30 zur Verfügung. Die Anzahl der zusammengeschalteten aktivierten Einzelspulen 30a, 30b, 30c ist dann in der Regel zu groß und wird wie nachstehend beschrieben heruntergeregelt. Die aktivierte Teilspule kann unter diesen Umständen aber auch nur aus einem Bruchteil aller Einzelspulen 30a, 30b, 30c bestehen.

Eine Messeinrichtung 60 dient zum Messen einer magnetischen Feldstärke.

In einer Steuereinrichtung 50 ist eine Steuerapplikation 55 ausführbar und steuert die Messeinrichtung 60 und die Aktivierungseinrichtung 40. Dazu veranlasst die Steuerapplikation 55 die Messeinrichtung 60, beispielsweise durch ein entsprechendes Steuersignal, die magnetische Feldstärke des Feldes zu messen, und bestimmt in Abhängigkeit von diesem Wert eine geeignete Spulenwindungsanzahl. Schließlich veranlasst die Steuerapplikation 55 die Aktivierungsapplikation 40 eine Anzahl von separaten Einzelspulen 30a, 30b, 30c zu der aktivierten Teilspule zusammenzuschalten, wobei diese Anzahl der geeigneten Spulenwindungsanzahl entspricht.

Die Spulenwindungsanzahl wird durch die Steuerapplikation 55 dabei zusätzlich abhängig von der Betriebsspannung der Chipkarte 10 bestimmt. Diese liegt in der Regel im Bereich von 3-5 Volt. Das heißt, die Steuerapplikation 55 bestimmt, ausgehend von der benötigten Betriebsspannung der Chipkarte 10 und der von der Messeinrichtung 60 gemessenen Feldstärke eine möglichst optimale Spulenwindungsanzahl, so dass die aktivierte Teilspule, die anschließend mittels der Aktivierungsapplikation 40 durch Zusammenschalten genau dieser Anzahl von Einzelspulen 30a, 30b, 30c gebildet wird, ausreicht, um eine notwendige Versorgungsspannung für die Chipkarte 10 bereitzustellen, ohne dass nicht benötigte Energie aufgenommen wird, die in Wärme umgesetzt den Datenträger schädigen kann. Die Bestimmung der Spulenwindungsanzahl kann noch von weiteren Chipkartenparametern beeinflusst werden, beispielsweise von der Temperatur eines Parallelreglers 70.

Der Parallelregler 70 dient der Regelung der an der Steuereinrichtung 50 und dem integrierten Schaltkreis 20 anliegenden Spannung. Er gleicht Spannungsschwankungen der in der aktivierten Teilspule induzierten Spannung aus und sorgt dadurch für eine gleichmäßige Versorgungsspannung einer geeigneten Höhe. Der Parallelregler 70 kann beispielsweise mit Hilfe einer Zener-Diode gebildet sein. Alternativ oder zusätzlich kann ein einfacherer Parallelregler 70 verwendet werden, beispielsweise können nicht aktivierte Einzelspulen 30a, 30b, 30c zusätzlich als Parallelwiderstände eingesetzt werden. Ferner kann der Parallelregler 70 thermisch leitend mit hier nicht dargestellten Kontaktflächen verbunden sein. Der Parallelregler 70 kann jedoch auch komplett fehlen.

Eine Kapazität 80 bildet zusammen mit der aktivierten Teilspule einen Parallelschwingkreis. Dieser besitzt eine Resonanzfrequenz, die der Arbeitsfrequenz eines Sendesystems, welches das elektromagnetische Wechselfeld erzeugt, entspricht, und dient zur Erhöhung des Wirkungsgrades der Energieaufnahme der Chipkarte 10. Die Energieaufnahme der Chipkarte 10 kann durch den Schwingkreis auch negativ beeinflusst werden, beispielsweise indem der Schwingkreis durch das Verändern der Kapazität verstimmt wird, was die Energieaufnahme vermindert.

Parallelregler 70, Steuereinrichtung 50 und Aktivierungseinrichtung 40 sind jeweils als separate Bauteile gebildet. Es ist gleichfalls möglich, alle diese Bauteile in den Schaltkreis 20 zu integrieren oder nur die Aktivierungseinrichtung 40 oder die Aktivierungseinrichtung 40 und die Steuereinrichtung 50 separat auszubilden. Ist nur die Aktivierungseinrichtung 40 separat ausgebildet, so kann diese Kommandos zum Aktivieren der Einzelspulen 30a, 30b, 30c von der Steuereinrichtung 50 entweder über die Spulenleitungen mittels einer speziellen Codierung oder über eine separate Steuerungsleitung (nicht gezeigt) erhalten.

Mit Bezug auf Figur 2 werden im Folgenden die Schritte einer bevorzugten Ausführungsform des erfindungsgemäßen Verfahrens beschrieben.

In Schritt 100 wird die Chipkarte 10 in ein elektromagnetisches Feld eines Lesegeräts eingebracht.

Eine initiale Versorgungsspannung wird in Schritt 110 in der zu Beginn aktivierten Teilspule induziert. Eine solche aktivierte Teilspule ist in der Chipkarte 10 wie vorstehend beschrieben immer dann automatisch aus aktivierten Einzelspulen 30a, 30b, 30c zusammengeschaltet, wenn keine ausreichende Energieversorgung für die Chipkarte 10 vorliegt, also z.B. bevor die Chipkarte 10 in Schritt 100 in das Feld eingebracht worden ist. Mittels des Parallelreglers 70 wird die initiale Versorgungsspannung auf eine für die Chipkarte 10 geeignete Versorgungsspannung geregelt.

Die Steuerapplikation 55 ermittelt nun in Schritt 120 mittels der Messeinrichtung 60 die magnetische Feldstärke als zumindest einen Wert, der die Energieaufnahme der Chipkarte 10 betrifft. Andere Werte, die ebenfalls die Energieaufnahme der Chipkarte 10 betreffen, können ebenso von der Steuerapplikation 55 bestimmt werden. Ein solcher Wert könnte beispielsweise die Temperatur des Parallelreglers 70 sein. Eine dauerhaft stark erhöhte Temperatur dieses Bauteils deutet auf eine anhaltend zu hohe Energieaufnahme der Chipkarte 10 hin. Dieses Problem tritt vor allem dann auf, wenn die Chipkarte 10 dauerhaft einem Feld ausgesetzt ist, wie dies z.B. bei dem Techosmart-System zur Verwaltung von Autobahngebühren in Lastkraftwagen der Fall ist.

In Schritt 130 bestimmt die Steuerapplikation 55 die geeignete Spulenwindungsanzahl in Abhängigkeit von der gemessenen Feldstärke. Die Betriebsspannung der Chipkarte 10 kann als Parameter zusätzlich in die Berechnung der Spulenwindungsanzahl mit eingehen, genauso wie die weiteren, eventuell ermittelten, die Energieaufnahme der Chipkarte 10 betreffenden Werte.

Die Steuerapplikation 55 veranlasst in Schritt 140 die Aktivierungseinrichtung 40, eine Anzahl von Einzelspulen 30a, 30b, 30c zu einer aktivierten Teilspule zusammenzuschalten, die der zuvor bestimmten geeigneten Spulenwindungsanzahl entspricht. Als Ergebnis werden also effektiv von der aktuell aktivierten Teilspule entweder einige Einzelspulen deaktiviert oder herausgeschaltet, sofern sich die aktuelle Energieaufnahme als überhöht herausgestellt hat. Im anderen Fall, dass z.B. die aktuelle Energieaufnahme als zu niedrig erkannt worden ist und kaum eine ausreichende Versorgungsspannung garantiert werden kann, werden zusätzliche zur Zeit deaktivierte Einzelspulen 30a, 30b, 30c aktiviert, falls diese noch vorhanden sind.

Die Energieaufnahme der Chipkarte 10 kann zusätzlich durch weitere Maßnahmen beeinflusst werden. Dazu zählt die bereits erwähnte Verstimmung des Parallelschwingkreises oder die Verwendung von nicht aktivierten Einzelspulen 30a, 30b, 30c als Parallelwiderstände. Um der zu starken Wärmeentwicklung des Parallelreglers 70 entgegen zu wirken, können zusätzlich Peripherieteile der Chipkarte 10, die für aktuell auf dem integrierten Schaltkreis 20 ausgeführte Applikationen nicht benötigt werden, dazugeschaltet werden.

Die Schritte 120,130 und 140 werden dann in regelmäßigen oder unregelmäßigen Abständen wiederholt, um sich eventuell ändernden Parametern, die die Energieaufnahme der Chipkarte 10 betreffen, Rechnung zu tragen. Eine überschüssige Energieaufnahme der Chipkarte 10 wird dadurch während der gesamten Nutzungsdauer der Chipkarte 10 verhindert.

## Patentansprüche

1. Portabler Datenträger (10), umfassend einen integrierten Schaltkreis (20), eine eine Vielzahl von Spulenwindungen (30a, 30b, 30c) umfassende Spule (30), die zur Energieaufnahme aus einem elektromagnetischen Feld eingerichtet ist, in dem sich der Datenträger (10) befindet,
- eine Aktivierungseinrichtung (40), die eingerichtet ist, Spulenwindungen (30a, 30b, 30c) der Spule (30) zur Energieaufnahme aus dem elektromagnetischen Feld zu aktivieren, sowie
- eine Steuereinrichtung (50), die eingerichtet ist,
- zumindest einen die Energieaufnahme des Datenträgers (10) betreffenden Wert mittels eines geeigneten Sensors zu ermitteln,
- eine geeignete Spulenwindungsanzahl in Abhängigkeit von dem zumindest einen Wert zu bestimmen und
- die Aktivierungseinrichtung (40) zu veranlassen, eine Anzahl der Spulenwindungen (30a, 30b, 30c) der Spule (30) zu aktivieren,
**gekennzeichnet dadurch, dass**
die aktivierbaren Spulenwindungen (30a, 30b, 30c) eine Vielzahl von zu Teilspulen der Spule (30) zusammenschaltbaren separaten Einzelspulen (30a, 30b, 30c) bilden und die Aktivierungseinrichtung (40) eingerichtet ist, zum Aktivieren von Spulenwindungen (30a, 30b, 30c) der Spule (30) separate Einzelspulen (30a, 30b, 30c) zusammenzuschalten und eine aktivierte Teilspule der Spule (30) zu bilden,
wobei die von der Steuereinrichtung (50) bestimmte Spulenwindungsanzahl der Spule (30) ein Optimum hinsichtlich einer mindestens bereitzustellenden Betriebsspannung des Datenträgers (10) und einer Minimierung von überschüssig aufgenommener Energie ist,
wobei die Steuereinrichtung (50) eingerichtet ist, die Spulenwindungsanzahl derart zu bestimmen, dass die Induktionsspannung im Wesentlichen der Betriebsspannung entspricht.

2. Datenträger (10) nach Anspruch 1, **dadurch gekennzeichnet, dass** die Steuereinrichtung (50) eingerichtet ist, die Spulenwindungsanzahl zusätzlich in Abhängigkeit von einer Betriebsspannung des Datenträgers (10) derart zu bestimmen, dass eine durch das elektromagnetische Feld in den aktivierten Spulenwindungen (30a, 30b, 30c) der Spule (30) induzierte Induktionsspannung zumindest der Betriebsspannung entspricht.

3. Datenträger (10) nach einem der Ansprüche 1 bis 2, **gekennzeichnet durch** eine Messeinrichtung (60), die eingerichtet ist, eine magnetische Feldstärke des elektromagnetischen Feldes zu messen, und die Steuereinrichtung (50), die eingerichtet ist, die Messeinrichtung (60) zum Messen der magnetischen Feldstärke zu veranlassen und die gemessene Feldstärke als den zumindest einen Wert zu ermitteln.

4. Datenträger (10) nach einem der Ansprüche 1 bis 3, **gekennzeichnet durch** einen Parallelregler (70), der eingerichtet ist, eine in dem Datenträger (10) anliegende, von einer **durch** das elektromagnetische Feld in den aktivierten Spulenwindungen (30a, 30b, 30c) der Spule (30) induzierten Induktionsspannung abhängige Versorgungsspannung zu regeln.

5. Datenträger (10) nach Anspruch 4, **dadurch gekennzeichnet, dass** der Parallelregler (70) Bestandteil des integrierten Schaltkreises (20) ist.

6. Datenträger (10) nach einem der Ansprüche 1 bis 5, **dadurch gekennzeichnet, dass** die Steuereinrichtung (50) und/oder die Aktivierungseinrichtung (40) Bestandteile des integrierten Schaltkreises (20) sind.

7. Datenträger (10) nach einem der Ansprüche 1 bis 6, **dadurch gekennzeichnet, dass** die Einzelspulen (30a, 30b, 30c) derart eingerichtet sind, dass bei nicht vorhandener Energieversorgung für den Datenträger (10) eine Mindestanzahl von Einzelspulen (30a, 30b, 30c) zu einer aktivierten Teilspule zusammengeschaltet sind.

8. Datenträger (10) nach einem der Ansprüche 1 bis 7, **dadurch gekennzeichnet, dass** der Datenträger (10) eine kontaktlose Chipkarte (10) ist.

9. Verfahren zum Steuern der Energieaufnahme eines portablen Datenträgers (10) aus einem elektromagnetischen Feld, in dem sich der Datenträger (10) befindet, mittels einer eine Vielzahl von Spulenwindungen (30a, 30b, 30c) umfassenden Spule (30) des Datenträgers (10) mit den Schritten:
- Ermitteln zumindest eines die Energieaufnahme betreffenden Wertes;
- Bestimmen einer geeigneten Spulenwindungsanzahl in Abhängigkeit von dem zumindest einen Wert;
- Aktivieren einer Anzahl der Spulenwindungen (30a, 30b, 30c) der Spule (30) zur Energieaufnahme aus dem elektromagnetischen Feld,
**gekennzeichnet dadurch, daß**
die aktivierbaren Spulenwindungen (30a, 30b, 30c) eine Vielzahl von zu Teilspulen der Spule (30) zusammenschaltbaren separaten Einzelspulen (30a, 30b, 30c) bilden und die Aktivierungseinrichtung (40) separate Einzelspulen (30a, 30b, 30c) zusammenschaltet um Spulenwindungen (30a, 30b, 30c) der Spule (30) zu aktivieren und eine aktivierte Teilspule der Spule (30) zu bilden,
wobei die bestimmte Spulenwindungsanzahl der Spule (30) ein Optimum hinsichtlich einer mindestens bereitzustellenden Betriebsspannung des Datenträgers (10) und einer Minimierung von überschüssig aufgenommener Energie ist,
wobei die Steuereinrichtung (50) eingerichtet ist, die Spulenwindungsanzahl derart zu bestimmen, dass die Induktionsspannung im Wesentlichen der Betriebsspannung entspricht.

10. Verfahren nach Anspruch 9, **dadurch gekennzeichnet, dass** die geeignete Spulenwindungsanzahl zusätzlich in Abhängigkeit von einer Betriebsspannung des Datenträgers (10) derart bestimmt wird, dass eine durch das elektromagnetische Feld in den aktivierten Spulenwindungen (30a, 30b, 30c) der Spule (30) induzierte Induktionsspannung zumindest der Betriebsspannung entspricht.

11. Verfahren nach einem der Ansprüche 9 bis 10, **dadurch gekennzeichnet, dass** als der zumindest eine Wert die magnetische Feldstärke des elektromagnetischen Feldes ermittelt wird.

12. Verfahren nach einem der Ansprüche 9 bis 11, **dadurch gekennzeichnet, dass** das Ermitteln des zumindest einen Wertes und/oder das Bestimmen der Spulenwindungsanzahl und/oder das Aktivieren von Spulenwindungen von einer auf einem integrierten Schaltkreis (20) des Datenträgers (10) ausführbaren Steuerapplikation (55) durchgeführt wird.

13. Verfahren nach einem der Ansprüche 9 bis 12, **gekennzeichnet durch** den Schritt des Bereitstellens eines Parallelreglers (70) in dem Datenträger (10) zum Regeln einer in dem Datenträger (10) anliegenden, von einer **durch** das elektromagnetische Feld in den aktivierten Spulenwindungen (30a, 30b, 30c) der Spule (30) induzierten Induktionsspannung abhängigen Versorgungsspannung.

## Claims

1. A portable data carrier (10), comprising an integrated circuit (20), a coil (30) comprising a multiplicity of coil windings (30a, 30b, 30c), said coil (30) being adapted to draw energy from an electromagnetic field in which the data carrier is located (10),
- an activation device (40) which is adapted to activate coil windings (30a, 30b, 30c) of the coil (30) to draw energy from the electromagnetic field, as well as
- a control device (50) which is adapted to
- ascertain by means of a suitable sensor at least one value concerning the drawing of energy by the data carrier (10),
- determine a suitable number of coil windings in dependence on the at least one value and
- cause the activation device (40) to activate a number of the coil windings (30a, 30b, 30c) of the coil (30),
**characterized in that**
the activatable coil windings (30a, 30b, 30c) form a multiplicity of separate single coils (30a, 30b, 30c) which can be interconnected to form partial coils of the coil (30), and the activation device (40) is adapted, for activating coil windings (30a, 30b, 30c) of the coil (30), to interconnect separate single coils (30a, 30b, 30c) and to form an activated partial coil of the coil (30),
wherein the number of coil windings of the coil (30) determined by the control device (50) is an optimum with regard to a operating voltage of the data carrier (10) to be made available at least and a minimization of excessively drawn energy,
wherein the control device (50) is adapted to so determine the number of coil windings that the induction voltage substantially corresponds to the operating voltage.

2. The data carrier (10) according to claim 1, **characterized in that** the control device (50) is adapted to so determine the number of coil windings additionally in dependence on an operating voltage of the data carrier (10) that an induction voltage induced by the electromagnetic field in the activated coil windings (30a, 30b, 30c) of the coil (30) corresponds at least to the operating voltage.

3. The data carrier (10) according to any of the claims 1 to 2, **characterized by** a measuring device (60) that is adapted to measure a magnetic field strength of the electromagnetic field, and the control device (50) that is adapted to cause the measuring device (60) to measure the magnetic field strength and to ascertain the measured field strength as the at least one value.

4. The data carrier (10) according to any of the claims 1 to 3, **characterized by** a parallel regulator (70) that is adapted to regulate a supply voltage present in the data carrier (10), said supply voltage being dependent on the induction voltage induced by the electromagnetic field in the activated coil windings (30a, 30b, 30c) of the coil (30).

5. The data carrier (10) according to claim 4, **characterized in that** the parallel regulator (70) forms part of the integrated circuit (20).

6. The data carrier (10) according to any of the claims 1 to 5, **characterized in that** the control device (50) and/or the activation device (40) form part of the integrated circuit (20).

7. The data carrier (10) according to any of the claims 1 to 6, **characterized in that** the single coils (30a, 30b, 30c) are so adapted that upon an absence of energy supply for the data carrier (10) a minimum number of single coils (30a, 30b, 30c) are interconnected to form an activated partial coil.

8. The data carrier (10) according to any of the claims 1 to 7, **characterized in that** the data carrier (10) is a contactless chip card (10).

9. A method for controlling the drawing of energy by a portable data carrier (10) from an electromagnetic field in which the data carrier (10) is disposed, by means of a coil (30) of the data carrier (10) comprising a multiplicity of coil windings (30a, 30b, 30c), having the steps of:
- ascertaining at least one value concerning the drawing of energy;
- determining a suitable number of coil windings in dependence on the at least one value;
- activating a number of the coil windings (30a, 30b, 30c) of the coil (30) for drawing energy from the electromagnetic field,
**characterized in that**
the activatable coil windings (30a, 30b, 30c) form a multiplicity of separate single coils (30a, 30b, 30c) that can be interconnected to form partial coils of the coil (30), and the activation device (40) interconnects separate single coils (30a, 30b, 30c) to activate coil windings (30a, 30b, 30c) of the coil (30) and form an activated partial coil of the coil (30),
wherein the determined number of coil windings of the coil (30) is an optimum with regard to an operating voltage of the data carrier (10) to be provided at least and a minimization of excessively drawn energy,
wherein the control device (50) is adapted to so determine the number of coil windings that the induction voltage substantially corresponds to the operating voltage.

10. The method according to claim 9, **characterized in that** the suitable number of coil windings is so determined additionally in dependence on an operating voltage of the data carrier (10) that an induction voltage induced by the electromagnetic field in the activated coil windings (30a, 30b, 30c) of the coil (30) corresponds at least to the operating voltage.

11. The method according to any of the claims 9 to 10, **characterized in that** the magnetic field strength of the electromagnetic field is ascertained as the at least one value.

12. The method according to any of the claims 9 to 11, **characterized in that** the ascertaining of the at least one value and/or the determining of the number of coil windings and/or the activating of coil windings is carried out by a control application (55) executable on an integrated circuit (20) of the data carrier (10).

13. The method according to any of the claims 9 to 12, **characterized by** the step of making available a parallel regulator (70) in the data carrier (10) for regulating an operating voltage present in the data carrier (10), said operating voltage being dependent on an induction voltage induced by the electromagnetic field in the activated coil windings (30a, 30b, 30c) of the coil (30).

## Revendications

1. Support de données (10) portable comprenant un circuit intégré (20), une bobine (30) dotée d'une pluralité de spires de bobine (30a, 30b, 30c) et équipée pour absorber de l'énergie à partir d'un champ électromagnétique dans lequel se trouve le support de données (10),
- un dispositif d'activation (40) qui est équipé pour activer des spires de bobine (30a, 30b, 30c) de la bobine (30) de manière à ce qu'elles absorbent de l'énergie à partir du champ électromagnétique, ainsi que
- un dispositif de commande (50) qui est équipé pour
- établir, au moyen d'un capteur approprié, au moins une valeur concernant l'absorption d'énergie par le support de données (10),
- déterminer, en fonction de la au moins une valeur, un nombre approprié de spires de bobine, et
- amener le dispositif d'activation (40) à activer un nombre des spires de bobine (30a, 30b, 30c) de la bobine (30),
**caractérisé en ce que**
les spires de bobine (30a, 30b, 30c) activables constituent une pluralité de bobines (30a, 30b, 30c) distinctes séparées interconnectables de manière à obtenir des sections de bobine de la bobine (30) et **en ce que** le dispositif d'activation (40) est équipé pour interconnecter des bobines (30a, 30b, 30c) distinctes séparées afin d'activer des spires de bobine (30a, 30b, 30c) de la bobine (30) et de constituer une section de bobine activée de la bobine (30),
le nombre de spires de bobine de la bobine (30) déterminé par le dispositif de commande (50) étant un optimum quant à une tension de fonctionnement du support de données (10) devant être mise au moins à disposition et une minimisation d'énergie excédentairement absorbée,
le dispositif de commande (50) étant équipé pour déterminer de telle manière le nombre de spires de bobine que la tension d'induction correspond essentiellement à la tension de fonctionnement.

2. Support de données (10) selon la revendication 1, **caractérisé en ce que** le dispositif de commande (50) est équipé pour déterminer, en plus en fonction d'une tension de fonctionnement du support de données (10), de telle manière le nombre de spires de bobine qu'une tension d'induction induite par le champ électromagnétique dans les spires de bobine (30a, 30b, 30c) activées de la bobine (30) correspond au moins à la tension de fonctionnement.

3. Support de données (10) selon une des revendications de 1 à 2, **caractérisé par** un dispositif de mesure (60) qui est équipé pour mesurer une intensité magnétique de champ du champ électromagnétique, et par le dispositif de commande (50) qui est équipé pour conduire le dispositif de mesure (60) à mesurer l'intensité magnétique de champ et établir en tant que la au moins une valeur l'intensité de champ mesurée.

4. Support de données (10) selon une des revendications de 1 à 3, **caractérisé par** un régulateur secondaire (70) qui est équipé pour réguler une tension d'alimentation existant dans le support de données (10), dépendante d'une tension d'induction induite par le champ électromagnétique dans les spires de bobine (30a, 30b, 30c) activées de la bobine (30).

5. Support de données (10) selon la revendication 4, **caractérisé en ce que** le régulateur secondaire (70) est une partie constituante du circuit intégré (20).

6. Support de données (10) selon une des revendications de 1 à 5, **caractérisé en ce que** le dispositif de commande (50) et/ou le dispositif d'activation (40) sont des parties constituantes du circuit intégré (20).

7. Support de données (10) selon une des revendications de 1 à 6, **caractérisé en ce que** les bobines (30a, 30b, 30c) distinctes sont équipées de telle manière que, en cas d'absence d'alimentation du support de données (10) en énergie, un nombre minimal de bobines (30a, 30b, 30c) distinctes sont interconnectées de manière à obtenir une section de bobine activée.

8. Support de données (10) selon une des revendications de 1 à 7, **caractérisé en ce que** le support de données (10) est une carte à puce (10) sans contact.

9. Procédé de commande de l'absorption d'énergie par un support de données (10) portable à partir d'un champ électromagnétique dans lequel se trouve le support de données (10), au moyen d'une bobine (30) du support de données (10) dotée d'une pluralité de spires de bobine (30a, 30b, 30c), comprenant les étapes:
- établissement d'au moins une valeur concernant l'absorption d'énergie;
- détermination d'un nombre approprié de spires de bobine en fonction de la au moins une valeur;
- activation d'un nombre de spires de bobine (30a, 30b, 30c) de la bobine (30) pour l'absorption d'énergie à partir du champ électromagnétique,
**caractérisé en ce que**
- les spires de bobine (30a, 30b, 30c) activables constituent une pluralité de bobines (30a, 30b, 30c) distinctes séparées interconnectables de manière à obtenir des sections de bobine de la bobine (30) et **en ce que** le dispositif d'activation (40) interconnecte des bobines (30a, 30b, 30c) distinctes séparées afin d'activer des spires de bobine (30a, 30b, 30c) de la bobine (30) et de constituer une section de bobine activée de la bobine (30),
le nombre de spires de bobine de la bobine (30) déterminé étant un optimum quant à une tension de fonctionnement du support de données (10) devant être mise au moins à disposition et une minimisation d'énergie excédentairement absorbée,
le dispositif de commande (50) étant équipé pour déterminer de telle manière le nombre de spires de bobine que la tension d'induction correspond essentiellement à la tension de fonctionnement.

10. Procédé selon la revendication 9, **caractérisé en ce que** le nombre approprié de spires de bobine est déterminé en plus de telle manière en fonction d'une tension de fonctionnement du support de données (10) qu'une tension d'induction induite par le champ électromagnétique dans les spires de bobine (30a, 30b, 30c) activées de la bobine (30) correspond au moins à la tension de fonctionnement.

11. Procédé selon une des revendications de 9 à 10, **caractérisé en ce que**, en tant que la au moins une valeur, c'est l'intensité magnétique de champ du champ électromagnétique qui est établie.

12. Procédé selon une des revendications de 9 à 11, **caractérisé en ce que** l'établissement de la au moins une valeur et/ou l'établissement du nombre de spires de bobine et/ou l'activation de spires de bobine est réalisée par une application de commande (55) exécutable sur un circuit intégré (20) du support de données (10).

13. Procédé selon une des revendications de 9 à 12, **caractérisé par** l'étape de la mise à disposition d'un régulateur secondaire (70) dans le support de données (10) pour la régulation d'une tension d'alimentation existant dans le support de données (10), dépendante d'une tension d'induction induite par le champ électromagnétique dans les spires de bobine (30a, 30b, 30c) activées de la bobine (30).
